# EUROPEAN PATENT APPLICATION

(11) **EP 4 694 291 A1**
(43) Date of publication of application: **11.02.2026**
(21) Application number: 23929543.9
(22) Date of filing: 31.03.2023
(51) Int. Cl.: H04W 24/08, H04L 5/00, G06T 7/70

(54) **INTERFERENCE MEASUREMENT METHOD, APPARATUS AND DEVICE, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2023/085811
(87) International publication number: WO 2024/197960

(57) **Abstract**

The present disclosure relates to an interference measurement method, apparatus and device, and a storage medium. The method comprises: determining a first duration; receiving at least one reference signal reaching a terminal within the first duration; and performing interference measurement on the basis of the received at least one reference signal. By determining a first duration, receiving at least one reference signal reaching a terminal within the first duration, and performing interference measurement on the basis of the at least one reference signal, it is ensured that no ISI is present among a plurality of reference signals simultaneously received by the terminal, thereby improving the precision of interference detection.

## Description

### TECHNICAL FIELD

The present disclosure relates to the communication technical field, and in particular to an interference measurement method and apparatus, a device, and a storage medium.

### BACKGROUND

In related art, in a Dynamic Time Division Duplex (DTDD) scenario, in order to improve corresponding uplink communication performance, the proportion of uplink (UL) transmission slot(s) in a Time Division Duplex (TDD) configuration is increased accordingly. The DTDD, also known as dynamic TDD, may dynamically adjust respective proportions of UL and downlink (DL) transmission slots in a TDD configuration. Assuming that a serving cell and a neighboring cell dynamically adjust the TDD structures in their respective cells differently, this results in inconsistent TDD structures in respective cells, such as inconsistent transmission directions between the two cells, thus leading to severe interference.

In order to measure the interference situation between multiple terminals in two neighboring cells, Cross Link Interference (CLI) may be measured by sending a reference signal through a terminal. For example, a terminal 1 in a neighboring cell sends a reference signal, and a terminal 2 in a serving cell receives the reference signal and performs a measurement. The terminal 2 is referred to as a serving terminal, and the terminal 1 is an aggressor terminal. The serving terminal may also be referred to as a victim terminal.

In order to improve the efficiency of CLI measurement, the victim terminal may simultaneously receive reference signals sent by multiple aggressor terminals and perform corresponding CLI measurements. However, considering the propagation delays of the reference signals and synchronization errors between cells which different aggressor terminals reside in, serious Inter-Symbol Interference (ISI) occurs between the reference signals sent by the multiple aggressor terminals, thereby reducing the CLI measurement accuracy.

### SUMMARY

In order to overcome the problem existing in the related art, the present disclosure provides an interference measurement method and apparatus, a device and a storage medium.

According to a first aspect of an embodiment of the present disclosure, there is provided an interference measurement method. The method is performed by a terminal. The method includes: determining a first continuous time period; receiving at least one reference signal arriving at the terminal within the first continuous time period; and performing an interference measurement based on the received at least one reference signal.

In some implementations, the terminal does not expect to receive at least one reference signal that arrives at the terminal outside the first continuous time period.

In some implementations, the terminal does not expect to receive at least one reference signal from different serving cells.

In some implementations, the terminal does not expect to receive at least one reference signal from serving cells of different types.

In some implementations, the method further includes: determining a time window corresponding to the first continuous time period; wherein receiving the at least one reference signal arriving at the terminal within the first continuous time period includes: receiving the at least one reference signal arriving at the terminal within the time window.

In some implementations, the time window includes a time window starting position, and the time window starting position is determined based on at least one of: determining based on a reception time of the first reference signal; determining based on a reception time of a first designated reference signal, wherein the first designated reference signal is a reference signal having a largest or smallest reference signal identity; determining based on a reception time of a second designated reference signal, wherein the second designated reference signal is determined based on configuration information; determining based on a reception time of a third designated reference signal, wherein the third designated reference signal is a reference signal whose signal quality satisfies a quality threshold; or determining based on a time offset and a downlink time unit boundary.

In some implementations, in response to the time window starting position being determined based on the time offset and the downlink time unit boundary, the time window starting position is a time domain position obtained by advancing the downlink time unit boundary by the time offset.

In some implementations, the time offset is determined by at least one of: receiving first configuration information, and determining a timing advance based on the first configuration information; or determining the timing advance based a first predefined rule.

In some implementations, a duration of the first continuous time period is determined by at least one of: receiving second configuration information, and determining the duration of the first continuous time period based on the second configuration information; or determining the duration of the first continuous time period based on a second predefined rule.

In some implementations, a duration corresponding to the first continuous time period is less than or equal to a duration of a Cyclic Prefix (CP) corresponding to a downlink time unit.

According to a second aspect of an embodiment of the present disclosure, there is provided an interference measurement method. The method is performed by a network device. The method includes: configuring at least one reference signal; and sending first configuration information, wherein the first configuration information indicates a terminal to receive the at least one reference signal and perform an interference measurement.

In some implementations, the at least one reference signal configured by the network device comes from a same serving cell.

In some implementations, the at least one reference signal configured by the network device comes from a serving cell of a same type.

In some implementations, the method further includes: determining a time window corresponding to the first continuous time period; wherein configuring the at least one reference signal that arrives at a first terminal within the first continuous time period includes: configuring the at least one reference signal that arrives at the terminal within the time window.

In some implementations, the method further includes: determining a duration of a first continuous time period; and sending second configuration information, wherein the second configuration information is used to indicate the duration of the first continuous time period.

In some implementations, the duration corresponding to the first continuous time period is less than or equal to a duration of a Cyclic Prefix (CP) corresponding to a downlink time unit.

According to a third aspect of an embodiment of the present disclosure, there is provided an interference measurement apparatus. The apparatus includes: a processing module configured to determine a first continuous time period; and a receiving module configured to receive at least one reference signal arriving at a terminal within the first continuous time period; wherein the processing module is further configured to perform an interference measurement based on the received at least one reference signal.

In some implementations, the terminal does not expect to receive at least one reference signal that arrives at the terminal outside the first continuous time period.

In some implementations, the terminal does not expect to receive at least one reference signal from different serving cells.

In some implementations, the terminal does not expect to receive at least one reference signal from serving cells of different types.

In some implementations, the processing module is further configured to: determine a time window corresponding to the first continuous time period; wherein the receiving module is further configured to: receive the at least one reference signal arriving at the terminal within the time window.

In some implementations, the time window includes a time window starting position, and the time window starting position is determined based on at least one of: determining based on a reception time of the first reference signal; determining based on a reception time of a first designated reference signal, wherein the first designated reference signal is a reference signal having a largest or smallest reference signal identity; determining based on a reception time of a second designated reference signal, wherein the second designated reference signal is determined based on configuration information; determining based on a reception time of a third designated reference signal, wherein the third designated reference signal is a reference signal whose signal quality satisfies a quality threshold; or determining based on a time offset and a downlink time unit boundary.

In some implementations, in response to the time window starting position being determined based on the time offset and the downlink time unit boundary, the time window starting position is a time domain position obtained by advancing the downlink time unit boundary by the time offset.

In some implementations, the receiving module is further configured to receive first configuration information, and the processing module is further configured to determine a timing advance based on the first configuration information; or the processing module is further configured to determine the timing advance based a first predefined rule.

In some implementations, the receiving module is further configured to receive second configuration information, and the processing module is further configured to determine the duration of the first continuous time period based on the second configuration information; or the processing module is further configured to determine the duration of the first continuous time period based on a second predefined rule.

In some implementations, the duration corresponding to the first continuous time period is less than or equal to a duration of a CP corresponding to a downlink time unit.

According to a fourth aspect of an embodiment of the present disclosure, there is provided an interference measurement apparatus. The apparatus includes: a processing module configured to configure at least one reference signal; and a sending module configured to send first configuration information, wherein the first configuration information indicates a terminal to receive the at least one reference signal and perform an interference measurement.

In some implementations, in response to the at least one reference signal that arrives at a terminal within a first continuous time period coming from a same serving cell, the network device configures the at least one reference signal.

In some implementations, in response to the at least one reference signal that arrives at a terminal within a first continuous time period coming from a serving cell of a same type, the network device configures the at least one reference signal.

In some implementations, the processing module is further configured to: determine a duration of the first continuous time period; and the sending module is further configured to send second configuration information, wherein the second configuration information is used to indicate the duration of the first continuous time period.

In some implementations, the duration corresponding to the first continuous time period is less than or equal to a duration of a CP corresponding to a downlink time unit.

According to a fifth aspect of an embodiment of the present disclosure, there is provided an interference measurement device, including: a processor; and a memory configured to store instructions executable by the processor; wherein the processor is configured to perform any one of the methods according to the first aspect and implementations of the first aspect.

According to a sixth aspect of an embodiment of the present disclosure, there is provided an interference measurement device, including: a processor; and a memory configured to store instructions executable by the processor; wherein the processor is configured to perform any one of the methods according to the second aspect and implementations of the second aspect.

According to a seventh aspect of an embodiment of the present disclosure, there is provided a non-transitory computer-readable storage medium. When instructions in the storage medium are executed by a processor of a terminal, the terminal is enabled to perform any one of the methods according to the first aspect and implementations of the first aspect.

According to an eighth aspect of an embodiment of the present disclosure, there is provided a non-transitory computer-readable storage medium. When instructions in the storage medium are executed by a processor of a network device, the network device is enabled to perform any one of the methods according to the second aspect and implementations of the second aspect.

The technical solutions provided by the embodiments of the present disclosure can have the following beneficial effects: by determining a first continuous time period and receiving at least one reference signal arriving at a terminal within the first continuous time period, an interference measurement can be performed based on the at least one reference signal. This ensures that ISI interference is not present between multiple reference signals simultaneously received by the terminal, thereby improving interference detection accuracy.

It should be understood that the foregoing general description and the following detailed description are merely illustrative and explanatory and are not restrictive of the embodiments of the present disclosure.

### BRIEF DESCRIPTION OF THE DRAWINGS

The accompanying drawings, which are incorporated in and constitute a part of the specification, illustrate embodiments consistent with the present disclosure and, together with the specification, serve to explain the principles of the present disclosure.
FIG. 1 is a schematic diagram of a wireless communication system according to an example embodiment.
FIG. 2 is a schematic diagram of an interference scenario according to an example embodiment.
FIG. 3 is a schematic diagram of a CLI measurement scenario according to an example embodiment.
FIG. 4 is a schematic diagram of interference between reference signals according to an example embodiment.
FIG. 5 is a flowchart of an interference measurement method according to an example embodiment.
FIG. 6 is a flowchart of another interference measurement method according to an example embodiment.
FIG. 7 is a schematic diagram of a time window starting position according to an example embodiment.
FIG. 8 is a flowchart of still another interference measurement method according to an example embodiment.
FIG. 9 is a schematic diagram of an interference measurement apparatus according to an example embodiment.
FIG. 10 is a schematic diagram of an interference measurement apparatus according to an example embodiment.
FIG. 11 is a schematic diagram of an interference measurement device according to an example embodiment.
FIG. 12 is a schematic diagram of an interference measurement device according to an example embodiment.

### DETAILED DESCRIPTION

Example embodiments are described in detail herein, with examples illustrated in the accompanying drawings. When the following description refers to the drawings, the same numerals in different drawings represent the same or similar elements unless otherwise indicated. The implementations described in the following example embodiments are not intended to represent all implementations consistent with the present disclosure.

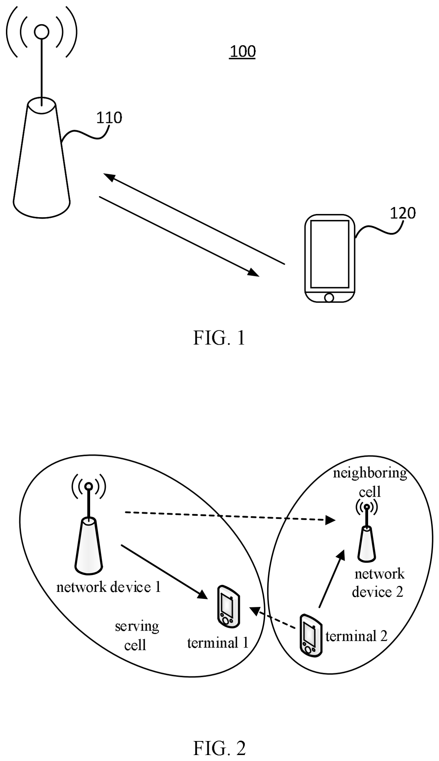

The communication method involved in the present disclosure may be applied to a wireless communication system 100 shown in FIG. 1. The network system may include a network device 110 and a terminal 120. It will be understood that the wireless communication system shown in FIG. 1 is merely for illustrative purposes, and the wireless communication system may also include other network devices, such as a core network device, a wireless relay device, and a wireless backhaul device, etc., which are not shown in FIG. 1. The embodiments of the present disclosure do not limit the number of network device(s) and terminal(s) included in the wireless communication system.

It should be further understood that the wireless communication system of the embodiments of the present disclosure is a network that provides wireless communication function(s). The wireless communication system may employ various communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier-Frequency Division Multiple Access (SC-FDMA), or carrier sense multiple access/collision avoidance (carrier sense multiple access with collision avoidance). Based on factors such as capacity, rate, or latency of different networks, the networks may be categorized as a 2G (generation) network, a 3G network, a 4G network, or a future evolved network, such as the fifth generation wireless communication system (5G) network. The 5G network is also referred to as NR. For ease of description, the present disclosure sometimes refers to the wireless communication network as simply a network.

Furthermore, the network device 110 involved in the present disclosure may also be referred to as a wireless access network device. The wireless access network device may be a base station, an evolved base station (evolved node B, eNB), a home base station, an Access Point (AP) in a Wireless Fidelity (WiFi) system, a wireless relay node, a wireless backhaul node, a Transmission Point (TP), or a TRP, etc. It may also be a gNB in an NR system, or a component or part of a device constituting a base station. In a case of a vehicle-to-everything (V2X) communication system, the network device may also be a vehicle-mounted device. It should be understood that the embodiments of the present disclosure do not limit the specific technology and device form employed by the network device.

Furthermore, the terminal 120 involved in the present disclosure may also be referred to as a terminal device, User Equipment (UE), Mobile Station (MS), Mobile Terminal (MT), etc., and is a device that provides voice and/or data connectivity to a user. For example, the terminal may be a handheld device or vehicle-mounted device with a wireless connection function. Currently, some examples of the terminal include: a smart phone (mobile phone), a Pocket Personal Computer (PPC), a handheld computer, a Personal Digital Assistant (PDA), a laptop, a tablet, a wearable device, or a vehicle-mounted device, etc. Furthermore, in a case of a vehicle-to-everything (V2X) communication system, the terminal device may also be a vehicle-mounted device. It should be understood that the embodiments of the present disclosure do not limit the specific technology or device form employed by the terminal.

In the embodiments of the present disclosure, the network device 110 and the terminal 120 may utilize any feasible wireless communication technology to achieve mutual data transmission. A transmission channel corresponding to the transmission of data from the network device 110 to the terminal 120 is called a downlink (DL) channel, and a transmission channel corresponding to the transmission of data from the terminal 120 to the network device 110 is called an UL. It is understood that the network device involved in the embodiments of the present disclosure may be a base station. Of course, the network device may also be any other possible network device, and the terminal may be any possible terminal, and the present disclosure does not impose limitations on this.

In Release (Rel) 18 DTDD scenarios, in order to improve corresponding uplink communication performance, the proportion of corresponding UL transmission slot(s) in a TDD configuration is increased. The DTDD, also known as dynamic TDD, may dynamically adjust the proportions of UL and downlink (DL) transmission slots in a TDD configuration. Assuming that a serving cell and a neighboring cell dynamically adjust the TDD structures in their respective cells differently, this results in inconsistent TDD structures in respective cells, such as inconsistent transmission directions in the two cells, thus causing severe interference.

For example, in the scenario shown in FIG. 2, it can be seen that a serving cell may include a terminal 1 and a network device 1. A neighboring cell adjacent to the serving cell may include a terminal 2 and a network device 2. The TDD structures of the serving cell and the neighboring cell may be inconsistent, and the serving cell and the neighboring cell may perform uplink and downlink transmissions respectively in a certain slot. For example, as shown in FIG. 2, the network device 1 sends downlink data to the terminal 1, and the terminal 2 sends uplink data to the network device 2. The two black solid arrows in FIG. 2 represent different transmission states of different cells at the same time moment. In this case, since the terminal 2 is in an uplink transmission slot, the data sent by the terminal 2 is also transmitted to the terminal 1. The terminal 1 may receive the downlink data sent by the network device 1 and the data sent by the terminal 2 simultaneously, thereby generating ISI. The dotted arrow pointing from the terminal 2 to the terminal 1 in FIG. 2 represents the interference caused by the data sent by the terminal 2 on the terminal 1.

In order to measure interference between terminals in neighboring cells, Release 16 uses a CLI Sounding Reference Signal (SRS) to measure the interference situation of Reference Signal Received Power (RSRP) between different terminals, and uses a CLI Received Signal Strength Indicator (RSSI) to measure an RSSI interference situation between different terminals, and defines a layer (L) 3-based CLI reporting framework.

To further improve CLI measurement reporting performance, Rel-18, based on Rel-16, specifies that UE-to-UE CLI can be reported based on either L1 or L2 measurement. Compared to L3 reporting, the corresponding reporting period can be shortened, thus allowing for greater flexibility in adapting to different CLI scenarios.

In some technologies, to mitigate the impact of UE-to-UE communication on the CLI measurement, event-triggered measurement reporting is considered. And, periodic reporting, aperiodic reporting, or semi-periodic reporting can be configured.

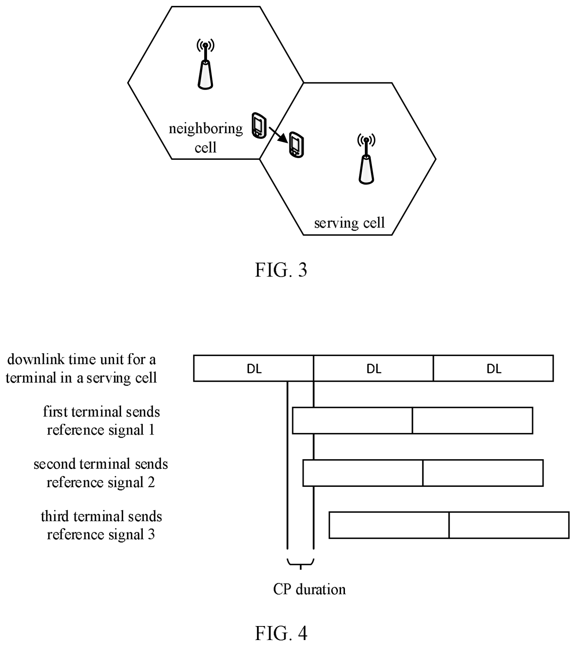

Considering serving terminals corresponding to the same cell, such as a victim terminal, the arrival time of a CLI reference signal received by the victim terminal from an aggressor terminal in another cell has a certain time error compared to a DL symbol. For example, as shown in FIG. 3, there is a certain error between the time when a reference signal sent by a terminal (such as an aggressor terminal) in a neighboring cell arrives at a terminal (such as a victim terminal) in a serving cell and the time when the terminal in the serving cell receives downlink data sent by a network device. The error is related to a propagation delay between the victim terminal and the aggressor terminal, a synchronization error between network devices in different cells.

For the victim terminal in the serving cell, in order to improve the interference measurement efficiency, the victim terminal may be allowed to simultaneously receive reference signals sent from multiple different aggressor terminals to perform corresponding interference measurements. For the victim terminal, considering factors such as reference signal propagation delays and synchronization errors between the serving cell and the cells which different aggressor terminals reside in, the time when the reference signals sent by different aggressor terminals arrive at the victim terminal may be outside a duration range of a Cyclic Prefix (CP). This may cause serious ISI interference between multiple reference signals received outside the CP duration and reference signals received within the CP duration, thus reducing the interference measurement accuracy of the victim terminal.

As shown in FIG. 4, a victim terminal receives a reference signal 1 sent by a first terminal and a reference signal 2 sent by a second terminal. Since these signals are received within the CP duration, ISI interference is not generated. However, a reference signal 3 which is received from a third terminal outside the CP duration may cause ISI interference to the received reference signal 1 and reference signal 2. Of course, the first terminal, the second terminal, and the third terminal may be from the same neighboring cell or different neighboring cells.

The present disclosure provides an interference measurement method and apparatus, a device, and a storage medium. In the present disclosure, a first continuous time period is determined, and at least one reference signal arriving at a terminal within the first continuous time period is received. Thus, the interference measurement can be performed based on the at least one reference signal. This ensures that ISI interference does not exist between multiple reference signals simultaneously received by the terminal, thereby improving interference detection accuracy.

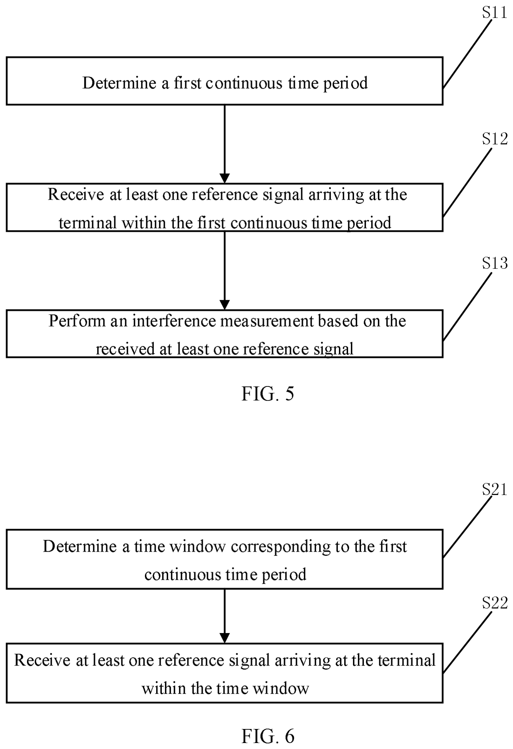

FIG. 5 is a flowchart of an interference measurement method according to an example embodiment. As shown in FIG. 5, the method is performed by a terminal. The method includes the following steps:

In step S11, a first continuous time period is determined.

In some embodiments, the terminal determines the first continuous time period.

For example, a terminal may receive configuration information sent by a network device. The configuration information configures the first continuous time period. The terminal may determine the first continuous time period according to the received configuration information. For example, the configuration information configures a starting time and a duration of the first continuous time period. For another example, the configuration information configures a starting time and an end time of the first continuous time period.

The duration of the first continuous time period may be one or more consecutive time units. A time unit may be, for example, an Orthogonal Frequency Division Multiplexing (OFDM) symbol, an OFDM slot, a frame, a subframe, or the like.

For another example, the terminal may determine the first continuous time period according to a predefined rule. For example, the predefined rule predefines the first continuous time period, for example, the predefined rule predefines a starting time of the first continuous time period and configures a duration; or, the predefined rule predefines a starting time of the first continuous time period and configures an end time of the first continuous time period.

For example, the duration of the first continuous time period may be a duration of a CP in an OFDM symbol where the terminal is located. In other words, the duration of the first continuous time period may be the same as the duration of the CP. However, it should be understood that the first continuous time period is not equal to the CP.

It can be understood that the duration of a specific CP may be pre-set according to actual conditions or determined based on protocol or specification, and the present disclosure does not limit this. For example, different types of CPs or different subcarrier spacing may each correspond to a possible CP duration.

In step S12, at least one reference signal arriving at the terminal within the first continuous time period is received.

In some embodiments, the terminal may receive at least one reference signal arriving at the terminal within the first continuous time period.

For example, the terminal may be a victim terminal, and the victim terminal may receive at least one reference signal arriving at the victim terminal within the first continuous time period. Of course, the present disclosure does not limit when the terminal starts receiving, and the victim terminal only needs to focus on reference signal(s) that can be received within the first time period.

It can be understood that the at least one reference signal may be sent by terminals in different neighboring cells, for example, reference signal(s) used for interference measurement. For example, the victim terminal receives reference signal(s) sent by at least one aggressor terminal within the first continuous time period.

In some embodiments, the at least one reference signal received by the terminal may be configured by the network device. The at least one reference signal may be configured to correspond to the same time domain position. The same time domain position may represent the same OFDM symbol, slot, frame, subframe, etc. However, the first continuous time period is often shorter than a duration corresponding to the same time domain position. Therefore, even if the at least one reference signal configured by the network device corresponds to the same time domain position, it is still needed to ensure that the at least one reference signal is received within the first continuous time period, so as to avoid ISI interference.

In step S13, interference measurement is performed based on the received at least one reference signal.

In some embodiments, the terminal may perform the interference measurement based on the at least one reference signal determined in S12.

For example, the victim terminal performs an interference measurement, such as the CLI measurement, between the victim terminal and corresponding aggressor(s) terminal based on the received reference signal sent by at least one aggressor terminal.

It can be understood that the purpose of the first continuous time period is to ensure that there is no ISI interference between reference signal(s) received by the terminal within this time period. Furthermore, the terminal can avoid the ISI interference between other reference signal(s) and the reference signal(s) received within the first continuous time period by not receiving reference signal(s) outside of this time period.

The present disclosure determines the first continuous time period and receives at least one reference signal arriving at the terminal within the first continuous time period. The interference measurement can be performed based on the at least one reference signal. This ensures that ISI interference is does not exist between multiple reference signals simultaneously received by the terminal, thereby improving interference detection accuracy.

In the interference measurement method provided by an embodiment of the present disclosure, the terminal does not expect to receive at least one reference signal that arrives at the terminal outside the first continuous time period.

In some embodiments, the terminal does not expect to receive at least one reference signal that arrives at the terminal outside the first continuous time period. In other words, the terminal does not expect at least one reference signal arriving at the terminal to be received outside of the first continuous time period.

For example, the terminal may determine the first continuous time period. If a reference signal, such as a reference signal 5, arrives at the victim terminal outside the first continuous time period, the victim terminal may ignore the reference signal 5 or the victim terminal does not receive the reference signal 5. In other words, the victim terminal does not care about any reference signal that arrives at the terminal outside the first continuous time period.

It can be seen that the terminal may ignore at least one reference signal arriving at the terminal outside the first continuous time period. When the terminal uses the reference signal(s) arriving at the terminal within the first continuous time period for interference measurement, the ISI interference between the reference signal(s) arriving at the terminal outside the first continuous time period and the reference signal(s) arriving at the terminal within the first continuous time period can be avoided.

In the present disclosure, the terminal can ignore at least one reference signal arriving at the terminal outside the first continuous time period, thereby avoiding the ISI interference between such reference signal and the reference signal(s) arriving at the terminal within the first continuous time period, thereby improving interference detection accuracy.

In the interference measurement method provided by an embodiment of the present disclosure, the terminal does not expect to receive at least one reference signal from different serving cells.

In some embodiments, the terminal does not expect to receive at least one reference signal from different serving cells. In other words, the terminal does not expect to receive at least one reference signal from different serving cells within the first continuous time period.

That is, the terminal does not expect to receive reference signal(s) from different serving cells within the first continuous time period. Alternatively, the terminal does not expect that at least one reference signal arriving at the terminal within the first continuous time period is reference signal(s) from different serving cells.

For example, the terminal determines the first continuous time period, and receives at least one reference signal arriving at the terminal within the first continuous time period. The at least one reference signal is reference signal(s) from the same serving cell.

For example, it is assumed that multiple aggressor terminals send reference signals for the interference measurement to a victim terminal, the multiple aggressor terminals are from the same serving cell. Alternatively, the multiple aggressor terminals are from different serving cells, but the synchronization errors between the network devices of the serving cell which the victim terminal resides in and the different serving cells are the same.

For another example, it can be assumed that one aggressor terminal sends a reference signal for the interference measurement to a victim terminal. It can be understood that in this example, since there is only one aggressor terminal sending a reference signal to the victim terminal, there is no situation where one aggressor terminal comes from different serving cells. Of course, in some specific scenarios, if one aggressor terminal sends a reference signal for the interference measurement to a victim terminal in a cell, the aggressor terminal moves and sends a reference signal for the interference measurement to the victim terminal again in another cell, the aggressor terminal in different cells can be considered as different aggressor terminals. In other words, the victim terminal only cares about whether the received reference signal(s) comes(come) from the same serving cell.

In some embodiments, the time for reference signals sent by different aggressor terminals to reach the victim terminal is mainly related to the propagation delays of the reference signals and the inter-cell synchronization error. Since the aggressor terminals and the victim terminal are often relatively close, the delay can be ignored. The synchronization error between different serving cells may usually reach up to 3 µs. Therefore, the delays of the reference signals sent by different aggressor terminals arriving at the victim terminal are mainly determined by the inter-cell synchronization error. Thus, if at least one aggressor terminal comes from the same serving cell, the inter-cell synchronization error can be the same. The victim terminal may receive reference signals sent by neighboring cells with the same synchronization error almost simultaneously. The victim terminal receives at least one reference signal that arrives at the terminal within the first continuous time period, and the at least one reference signal may come from the same serving cell. As for reference signals sent by other serving cells, since the synchronization errors are different, the terminal may not care about reference signals from different serving cells.

For example, the victim terminal does not receive reference signals that arrive at the terminal within the first continuous time period and come from different serving cells; or, the victim terminal ignores reference signals that arrive at the terminal within the first continuous time period and come from different serving cells.

For example, the victim terminal may predetermine to receive reference signal(s) from which serving cell, for example, serving cell 5. The victim terminal may receive reference signal(s) that arrives(arrive) at the terminal within the first continuous time period and comes(come) from the serving cell 5. Of course, the victim terminal may determine which serving cell based on other configuration information or based on a predefined method, and the present disclosure does not limit this.

For another example, the victim terminal may receive all reference signals arriving at the terminal within the first continuous time period, and then use reference signal(s) from a serving cell as a reference signal for subsequent interference measurement, while discarding or ignoring the remaining reference signal(s) from other serving cell(s).

It can be understood that the terminal receives reference signal(s) that arrives(arrive) at the terminal within the first time period and comes(come) from the same serving cell, and performs a subsequent interference measurement based on the reference signal(s). This can avoid ISI interference between reference signal(s) arriving at the terminal outside the first continuous time period and reference signal(s) arriving at the terminal within the first continuous time period, thereby improving the interference detection accuracy.

The present disclosure allows the terminal to ignore at least one reference signal from different serving cells that arrives at the terminal outside the first continuous time period, thereby avoiding ISI interference between such reference signal(s) and the reference signal(s) that arrives(arrive) at the terminal within the first continuous time period. Therefore, the present disclosure can improve interference detection accuracy.

In the interference measurement method provided by an embodiment of the present disclosure, the terminal does not expect to receive at least one reference signal from serving cells of different types.

In some embodiments, the terminal does not expect to receive at least one reference signal from serving cells of different types. In other words, the terminal does not expect to receive at least one reference signal from serving cells of different types within the first continuous time period.

That is, the terminal does not expect to receive reference signals from serving cells of different types within the first continuous time period. Alternatively, the terminal does not expect at least one reference signal arriving at the terminal within the first continuous time period to be reference signal(s) from serving cells of different types.

For example, the terminal determines the first continuous time period, and receives at least one reference signal arriving at the terminal within the first continuous time period. The at least one reference signal is reference signal(s) from serving cell(s) of the same type.

For example, it is assumed that there are multiple aggressor terminals sending reference signals for the interference measurement to a victim terminal, and the multiple aggressor terminals are from serving cells of the same type.

For another example, it can be assumed that one aggressor terminal sends a reference signal for the interference measurement to a victim terminal. It can be understood that in this example, since there is only one aggressor terminal sending a reference signal to the victim terminal, there is no situation where one aggressor terminal comes from serving cells of different types. Of course, in some specific scenarios, if one aggressor terminal sends a reference signal for the interference measurement to a victim terminal in a cell of a type and the aggressor terminal moves and sends a reference signal for the interference measurement to the victim terminal again in a cell of another type, in this case, the aggressor terminal in cells different types may be regarded as different aggressor terminals. In other words, the victim terminal only cares about whether the received reference signal(s) comes(come) from the serving cell(s) of the same type.

In some embodiments, the time for reference signals sent by different aggressor terminals to arrive at a victim terminal is mainly related to propagation delays of the reference signals and the inter-cell synchronization error. Since the aggressor terminals and the victim terminal are often close to each other, the delay can be ignored. Therefore, the delays of the reference signals sent by different aggressor terminals arriving at the victim terminal are mainly determined by the inter-cell synchronization error. For a heterogeneous network scenario, if at least one aggressor terminal comes from serving cell(s) of the same type, the inter-cell synchronization error may be considered to be the same. Therefore, if at least one aggressor terminal comes from the serving cell(s) of the same type, the victim terminal may receive reference signals sent by neighboring cells with the same synchronization error almost simultaneously. The victim terminal receives the at least one reference signal that arrives at the terminal within the first continuous time period, and the at least one reference signal may come from serving cells of the same type. For reference signals sent by serving cells of other types, due to different synchronization errors, the terminal may not care about the reference signals from serving cells of different types.

For example, the victim terminal does not receive reference signals that arrive at the terminal within the first continuous time period and come from serving cells of different types; or, the victim terminal ignores reference signals that arrive at the terminal within the first continuous time period and come from serving cells of different types.

For example, the victim terminal may predetermine to receive reference signal(s) from serving cell(s) of which type, for example, a micro cell or a macro cell. The victim terminal may receive reference signals that arrive at the terminal within the first continuous time period and come from a micro cell or a macro cell. Of course, the victim terminal may determine serving cell(s) of which type based on other configuration information or based on a predefined method, and the present disclosure does not limit this.

For another example, the victim terminal may receive all reference signals arriving at the terminal within the first continuous time period, and then use reference signal(s) from a serving cell of a certain type as reference signal(s) for subsequent interference measurement, and the victim terminal may discard or ignore the remaining reference signals from serving cells of other types.

It can be understood that the terminal receives reference signal(s) that arrives(arrive) at the terminal within the first time period and is(are) from the serving cell(s) of the same type, and performs a subsequent interference measurement based on the reference signal(s). The present disclosure can avoid ISI interference between reference signal(s) arriving at the terminal outside the first continuous time period and reference signal(s) arriving at the terminal within the first continuous time period, thereby improving the interference detection accuracy.

The present disclosure allows the terminal to ignore at least one reference signal that comes from serving cells of different types and arrives at the terminal outside the first continuous time period, thereby avoiding ISI interference between such reference signal(s) and the reference signal(s) arriving at the terminal within the first continuous time period, thereby improving interference detection accuracy.

In the interference measurement method provided in an embodiment of the present disclosure, FIG. 6 is a flowchart of another interference measurement method according to an example embodiment. As shown in FIG. 6, the method further includes the following steps:

In step S21, a time window corresponding to the first continuous time period is determined.

In some embodiments, the terminal may determine a time window corresponding to the first continuous time period. It can be understood that a duration of the time window is the same as a duration of the first continuous time period.

For example, the terminal may determine the duration of the time window based on the first continuous time period, and further determine the time window in combination with a downlink time unit configured for the terminal by the network device. This allows the terminal to obtain a time domain range corresponding to the time window. It can be understood that the downlink time unit may be a downlink OFDM symbol or a downlink OFDM slot. Of course, in some cases, the downlink time unit may also be a frame or subframe, which is not limited in the present disclosure.

For another example, the terminal may determine the time window based on configuration information or based on a predefined rule. In some cases, the configuration information may be used to configure the time window and to configure the first continuous time period. In other cases, different configuration information may be used to configure the time window and the first continuous time period separately.

For example, the configuration information may configure a starting position of the time window and a duration of the time window. For another example, the configuration information may configure a starting position of the time window and an ending position of the time window. Based on the configuration information, the terminal may determine the time domain range corresponding to the time window.

In some embodiments, the starting position of the time window may be a position obtained by advancing a downlink time unit boundary, which serves as a reference, by a time offset. For example, with the downlink time unit boundary as a reference, a position obtained by advancing the downlink time unit boundary by a time offset is used as the starting position of the time window. The downlink time unit boundary may be, for example, a starting time of a downlink OFDM symbol or a starting time of a downlink OFDM slot. The advanced time offset may be determined by a configuration or by a predefined method, and detailed descriptions will be omitted here.

For another example, a predefined rule may predefine a starting position of the time window and a duration of the time window. Alternatively, the predefined rule may predefine a starting position of the time window and an ending position of the time window. The terminal may determine the time domain range corresponding to the time window based on the predefined rule.

The receiving of at least one reference signal arriving at the terminal within the first continuous time period in S12 may further include:

In step S22, at least one reference signal arriving at the terminal within the time window is received.

In some embodiments, the terminal may receive at least one reference signal that arrives at the terminal within the time window.

It can be understood that since the time window is the time window corresponding to the first continuous time period, the terminal may receive at least one reference signal arriving at the terminal within the time window, so that the terminal may perform interference detection based on the at least one reference signal arriving at the terminal within the time window.

In some embodiments, the terminal does not expect at least one reference signal arriving at the terminal outside the time window.

In some embodiments, at least one reference signal arriving at the terminal within the time window is from different serving cells, and the terminal does not expect to receive such reference signal.

In some embodiments, at least one reference signal arriving at the terminal within the time window comes from serving cells of different types, and the terminal does not expect to receive such reference signal.

The present disclosure determines the time window corresponding to the first continuous time period and receives at least one reference signal arriving at the terminal within the time window. The interference measurement can be performed based on the at least one reference signal. This ensures that ISI interference does not exist between multiple reference signals simultaneously received by the terminal, thereby improving interference detection accuracy.

In the interference measurement method provided by an embodiment of the present disclosure, the time window includes a starting position of the time window, and the starting position of the time window is determined based on at least one of the following method(s): determining based on a reception time of the first reference signal; determining based on a reception time of a first designated reference signal, where the first designated reference signal is a reference signal with the largest or smallest reference signal identity; determining based on a reception time of a second designated reference signal, where the second designated reference signal is determined based on configuration information; determining based on a reception time of a third designated reference signal, where the third designated reference signal is a reference signal whose signal quality meets a quality threshold; determining based on a time offset and a downlink time unit boundary.

In some implementations, the starting position of the time window may be determined based on the time when the terminal receives the first reference signal.

For example, the terminal may determine the starting position of the time window based on the reception time of the first reference signal received by the device itself. For example, the terminal uses the reception time of the first reference signal received by the terminal as the starting position of the time window. Based on the duration of the time window or the starting position of the time window, the terminal may determine at least one reference signal that arrives at the terminal within the time window. The duration of the time window may be the duration of the first continuous time period, for example, it may be the same as the CP duration.

In some implementations, the starting position of the time window may be determined based on the reception time of the first designated reference signal, where the first designated reference signal is a reference signal having the largest or smallest reference signal identity.

For example, the terminal may determine reference signal(s) that the terminal may receive through configuration information sent by the network device, and use a reference signal with the largest or smallest reference signal identity as the first designated reference signal. It can be understood that the configuration information may indicate identities of all reference signals that the terminal may receive. Of course, the configuration information may be the same as the configuration information for configuring the time window or the configuration information for configuring the first continuous time period, or may be different configuration information, which is not limited in the present disclosure.

Alternatively, the network device may, based on the reference signals configured for the terminal, determine a reference signal with the largest or smallest reference signal identity as the first designated reference signal. The network device may send configuration information indicating the first designated reference signal to the terminal. The terminal receives the configuration information and determines the first designated reference signal based on the configuration information. The terminal may use the reception time of the first designated reference signal as the starting position of the time window. Based on the duration of the time window, the terminal may determine at least one reference signal that arrives at the terminal within the time window.

In some implementations, the starting position of the time window may be determined based on the reception time of the second designated reference signal, where the second designated reference signal is determined based on configuration information.

For example, the network device may designate a reference signal as the second designated reference signal and send configuration information indicating the second designated reference signal to the terminal. The terminal receives the configuration information and determines the second designated reference signal based on the configuration information. The terminal may use the reception time of the second designated reference signal as the starting position of the time window and determine at least one reference signal that arrives at the terminal within the time window based on the duration of the time window,.

In some implementations, the starting position of time window may be determined based on the reception time of the third designated reference signal, where the third designated reference signal is a reference signal whose signal quality satisfies a quality threshold.

For example, when receiving reference signals, the terminal may determine a signal quality of each reference signal, such as the RSRP or RSSI of the reference signal. The terminal may determine the first reference signal whose signal quality meets a quality threshold as the third designated reference signal. The terminal may uses the reception time of the third designated reference signal as the starting position of the time window. Based on the duration of the time window, the terminal may determine at least one reference signal that arrives at the terminal within the time window.

The aforementioned quality threshold may be determined based on configuration information or based on a predefined rule. For example, the terminal receives configuration information indicating the quality threshold. The terminal determines the quality threshold based on the configuration information. For another example, a predefined rule may predefine the quality threshold. The terminal determines the corresponding quality threshold based on the predefined rule. The present disclosure does not limit the method for determining the quality threshold.

In some implementations, the starting position of the time window may be determined based on a time offset and a downlink time unit boundary.

For example, the terminal may receive configuration information indicating the time offset and the downlink time unit boundary. Of course, the downlink time unit boundary may be indicated in the configuration information or in other TDD configuration information, which is not limited in the present disclosure.

For another example, the terminal may determine the time offset and downlink time unit boundary based on a predefined method. For example, the time offset and/or downlink time unit boundary may be predefined. In some cases, if the predefined rule only defines one of the time offset and downlink time unit boundary, the terminal may also determine a parameter not defined by the predefined rule by receiving configuration information that configures another parameter.

For example, if the predefined rule only defines the time offset, the terminal may determine the downlink time unit boundary by receiving configuration information for configuring the downlink time unit boundary. For another example, if the predefined rule only defines the downlink time unit boundary, the terminal may determine the time offset by receiving configuration information for configuring the time offset.

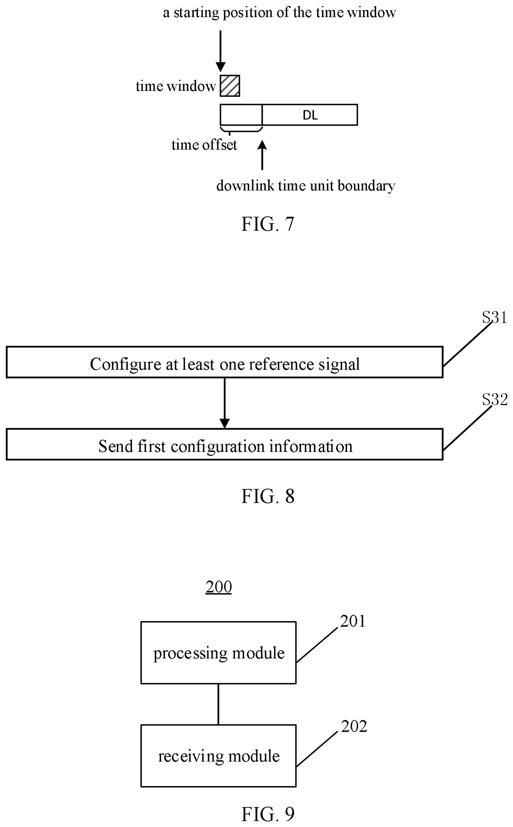

For example, the terminal may determine the time offset and downlink time unit boundary based on the above method(s). Using the downlink time unit boundary as a reference, the terminal determines the starting position of the time window by advancing the downlink time unit boundary by a duration corresponding to the time offset. For example, as shown in FIG. 7, the terminal determines the starting position of the time window based on the time offset and the downlink time unit boundary. Of course, in some cases, the duration of the time window corresponding to the first continuous time period may be less than the duration corresponding to the time offset. For example, the maximum duration of the time window may be 4.7 µs, while the time offset may generally be 13 µs or longer. Of course, the present disclosure does not limit the specific duration of the time window or the specific duration of the time offset. It is worth noting that FIG. 7 only illustrates a possible scenario. Of course, the duration of the time window may also be greater than the duration of the time offset. It should be understood that the specific duration of the time window and the specific duration of the time offset may be arbitrarily selected based on actual circumstances and are not limited by the present disclosure.

The present disclosure provides multiple methods for determining the starting position of the time window, so as to receive at least one reference signal arriving at the terminal within the time window. The interference measurement can be performed based on the at least one reference signal. This ensures that ISI interference does not exist between multiple reference signals simultaneously received by the terminal, thereby improving interference detection accuracy.

In the interference measurement method provided by an embodiment of the present disclosure, in response to the starting position of the time window being determined based on the time offset and the downlink time unit boundary, the starting position of the time window is a time domain position obtained by advancing the downlink time unit boundary by the time offset.

In some embodiments, the terminal may determine the time offset and the downlink time unit boundary based on configuration information or a predefined rule. The starting position of the time window may be located before the downlink time unit boundary, and a time interval between the starting position of the time window and the downlink time unit boundary is the same as the duration of the time offset.

For example, the terminal receives configuration information and determines the time offset based on an indication in the configuration information. It can be understood that the configuration information is used to indicate the time offset, that is, the configuration information includes a related parameter indicating the time offset.

For another example, the terminal determines the time offset based on a predefined rule. The time offset may be predefined.

The terminal determines the time offset using the method(s) provided in the above example(s). The terminal may use the downlink time unit boundary as a reference and determine the starting position of the time window by advancing the downlink time unit boundary by the duration corresponding to the time offset. The time interval between the starting position of the time window and the downlink time unit boundary is the duration corresponding to the time offset.

As shown in FIG. 7, the terminal may use the downlink time unit boundary, that is, the starting time of the downlink OFDM symbol or the starting time of the downlink OFDM slot as a reference, and determine the starting position of the time window by advancing the downlink time unit boundary by a time offset that is equal to is the time offset.

The present disclosure uses the time offset and the downlink time unit boundary to determine the starting position of the time window, so that at least one reference signal arriving at the terminal within that time window can be received. The interference measurement can be performed based on the at least one reference signal. This ensures that ISI interference does not exist between multiple reference signals simultaneously received by the terminal, thereby improving interference detection accuracy.

In the interference measurement method provided by an embodiment of the present disclosure, the time offset is determined in at least one of the following method(s): receiving first configuration information and determining the time offset based on the first configuration information; determining the time offset based on a first predefined rule.

In some implementations, the terminal may receive first configuration information and determine the time offset based on the first configuration information.

For example, the terminal may receive the first configuration information and determine the time offset based on the first configuration information. It can be understood that in this example, the first configuration information may be used to indicate the time offset.

For another example, the terminal may receive first configuration information indicating a time offset, and the terminal may determine the time offset based on the received configuration information.

In some embodiments, the terminal may determine the time offset based on a first predefined rule.

For example, the terminal may determine the time offset based on a first predefined rule, where the first predefined rule predefines a timing advance for determining the time window. The terminal may determine the timing advance based on the first predefined rule.

In some embodiments, the terminal may determine the time offset based on the first configuration information and the first predefined rule.

For example, the terminal determines the time offset based on the first configuration information. If the time offset is not configured in the first configuration information, or the terminal does not receive the first configuration information, the terminal may determine the time offset based on the first predefined rule. That is, the terminal may determine the time offset based on the first configuration information and the first predefined rule jointly.

The present disclosure provides multiple methods for determining the time offset. This allows the time window to be determined based on the time offset and downlink time unit boundary. At least one reference signal arriving at the terminal within the time window can be received. The interference measurement is performed based on the at least one reference signal. This ensures that ISI interference does not exist between multiple reference signals simultaneously received by the terminal, thereby improving interference detection accuracy.

In the interference measurement method provided by an embodiment of the present disclosure, the duration of the first continuous time period is determined by at least one of the following method(s): receiving second configuration information and determining the duration of the first continuous time period based on the second configuration information; determining the duration of the first continuous time period based on a second predefined rule.

In some embodiments, the terminal receives second configuration information indicating the duration of the first continuous time period, and the terminal may determine the duration of the first continuous time period based on the second configuration information.

For example, the second configuration information includes a parameter indicating the duration of the first continuous time period. Upon receiving the second configuration information, the terminal may parse the second configuration information and determine the duration of the first continuous time period through the corresponding parameter in the second configuration information, so that the terminal can subsequently receive at least one reference signal arriving at the terminal within the first continuous time period.

In some embodiments, the terminal determines the duration of the first continuous time period based on a second predefined rule.

For example, the second predefined rule predefines the duration of the first continuous time period. The terminal may determine the duration of the first continuous time period according to the second predefined rule, so that the terminal can subsequently receive at least one reference signal arriving at the terminal within the first continuous time period.

The present disclosure provides multiple methods for determining the first continuous time period, so as to receive at least one reference signal arriving at the terminal within the first continuous time period. The interference measurement can be performed based on the at least one reference signal. This ensures that ISI interference does not exist between multiple reference signals simultaneously received by the terminal, thereby improving interference detection accuracy.

In the interference measurement method provided by an embodiment of the present disclosure, the duration corresponding to the first continuous time period is less than or equal to the duration of the CP corresponding to the downlink time unit.

In some embodiments, the duration of the first continuous time period may be set to be the same as the duration of the CP corresponding to the downlink time unit to ensure that no ISI interference is generated between at least one reference signal received by the terminal within the first continuous time period.

For example, different CP durations may be determined based on differences in parameters such as CP type and subcarrier spacing. CP types may be divided into a normal CP and an extended CP. For example, a normal CP may be used as an example, as shown in Table 1.

**Table 1**

| subcarrier spacing (kHz) | useful symbol length Tᵤ (us) | CP T_{cp} (us) |
|---|---|---|
| 15 | 66.7 | 4.7 |
| 30 | 33.3 | 2.3 |
| 60 | 16.7 | 1.2 |
| 120 | 8.33 | 0.59 |
| 240 | 4.17 | 0.29 |

It can be seen that for a certain type of CP, different subcarrier spacing also has different CP durations, which can be selected based on actual conditions.

In some embodiments, the duration of the first continuous time period may be set to be shorter than the duration of the CP corresponding to the downlink time unit to ensure that no ISI interference is generated between the at least one reference signal received by the terminal within the first continuous time period. It can be understood that, in a case that the duration of the first continuous time period is the same as the duration of the CP corresponding to the downlink time unit, ISI interference between the at least one reference signal received by the terminal within the first continuous time period can be avoided. Therefore, even if the at least one reference signal is received within a shorter first continuous time period, ISI interference is not generated.

Of course, the duration of the first continuous time period may also be set to a suitable value according to the situation, and the present disclosure does not limit it.

It can be understood that the duration of the CP may also be the same as the duration of the time window mentioned above. In the present disclosure, "CP duration" and "duration of the CP" may be used interchangeably.

The present disclosure determines at least one reference signal arriving at the terminal within the CP duration and performs interference measurement based on the at least one reference signal. The present disclosure can ensure that there is no ISI interference between multiple reference signals simultaneously received by the terminal, thereby improving interference detection accuracy.

In some embodiments, it is considered that the terminal receives at least one reference signal within the first continuous time period. The starting position of the time window corresponding to the first continuous time period is determined based on an offset. The offset may be a timing advance configured by the network device. Taking FIG. 4 as an example, it is assumed that the terminal receives at least one reference signal configured on the second DL symbol. When the terminal starts to receive the reference signal(s) based on the starting position of the time window corresponding to the first continuous time period, the previous DL symbol is occupied. Of course, the duration of the time window corresponding to the first continuous time period may be greater than one OFDM symbol. Thus, the starting position of the time window determined by the terminal may be advanced by more symbols. Therefore, the terminal does not expect to send or receive data on these symbols. In other words, the terminal does not expect to send or receive data on one or more time units before the time unit where the interference measurement is performed.

Based on the same concept, the present disclosure further provides an interference measurement method performed by a network device.

FIG. 8 is a flowchart of another interference measurement method according to an example embodiment. As shown in FIG. 8, the method is performed by a network device. The method may include the following steps:
In step S31, at least one reference signal is configured.

In some embodiments, the network device may configure at least one reference signal arriving at a terminal within a first continuous time period.

For example, the terminal may be a victim terminal, and the network device configures at least one reference signal for the victim terminal. The at least one reference signal may arrive at the victim terminal within the first continuous time period.

It can be understood that the at least one reference signal may be sent by terminals in different neighboring cells, for example, reference signal(s) used for interference measurement. For example, the victim terminal receives reference signal(s) sent by at least one aggressor terminal within the first continuous time period.

In some embodiments, at least one reference signal may be configured to correspond to the same time domain position. The same time domain position may represent the same OFDM symbol, slot, frame, subframe, etc. However, the first continuous time period is often shorter than a duration corresponding to the same time domain position. Therefore, even if the at least one reference signal configured by the network device corresponds to the same time domain position, it is still needed to ensure that the at least one reference signal is received within the first continuous time period, so as to avoid ISI interference.

In step S32, first configuration information is sent.

In some embodiments, the network device may send first configuration information. The first configuration information indicates the terminal to receive the at least one reference signal and perform interference measurement. It is worth noting that the first configuration information here is different from the first configuration information received by the terminal in some embodiments. It should be understood that in the embodiments related to the network device, the first configuration information is used to indicate the terminal to receive the at least one reference signal. In the embodiments related to the terminal, the first configuration information is used to indicate a timing advance.

However, it is clear that the network side may also send configuration information indicating the timing advance to the terminal. In the present disclosure, the expressions "first" and "second" are only used to distinguish different configuration information, and do not limit the configuration information.

For example, a network device sends configuration information indicating at least one reference signal to a victim terminal. The terminal may determine which reference signals it can receive based on the configuration information. The configuration information may include reference signal identity(identities) indicating the at least one reference signal and a time domain position correspondingly configured for each reference signal.

In the present disclosure, a first continuous time period is determined, and at least one reference signal that arrives at a terminal within the first continuous time period is configured. This allows the terminal to perform the interference measurement based on the at least one reference signal. This ensures that ISI interference does not exist between multiple reference signals simultaneously received by the terminal, thereby improving interference detection accuracy.

In the interference measurement method provided by an embodiment of the present disclosure, the at least one reference signal configured by the network device arrives at the terminal within the first continuous time period.

In some embodiments, the at least one reference signal configured by the network device arrives at the terminal within the first continuous time period. In other words, the network device does not configure a reference signal that arrives at the terminal outside the first continuous time period.

For example, the network device may determine the first continuous time period. A reference signal, such as a reference signal 5, configured by the network device arrives at the victim terminal within the first continuous time period; or, the network device does not configure a reference signal 5 that arrives at the victim terminal outside the first continuous time period.

It can be seen that the at least one reference signal configured by the network device arrives at the terminal within the first continuous time period. When the terminal uses the reference signal(s) arriving at the terminal within the first continuous time period to perform interference measurement, ISI interference between reference signal(s) arriving at the terminal outside the first continuous time period and reference signal(s) arriving at the terminal within the first continuous time period can be avoided.

In the present disclosure, the network device configures the at least one reference signal to arrive at the terminal within the first continuous time period, thereby avoiding ISI interference between such reference signal(s) and reference signal(s) arriving at the terminal within the first continuous time period. Thus, the present disclosure can improve interference detection accuracy.

In the interference measurement method provided by an embodiment of the present disclosure, the at least one reference signal configured by the network device comes from the same serving cell.

In some embodiments, the at least one reference signal configured by the network device may arrive at the terminal within the first continuous time period, and the at least one reference signal comes from the same serving cell.

That is, the network device configures reference signal(s) arriving at the terminal within the first continuous time period to be reference signal(s) from the same serving cell. Alternatively, the network device does not configure reference signal(s) that arrive(arrive) at the terminal within the first continuous time period and is(are) reference signal(s) from different serving cells.

For example, the network device determines the first continuous time period, and configures at least one reference signal arriving at the terminal within the first continuous time period. The at least one reference signal is reference signal(s) from the same serving cell.

For example, it is assumed that multiple aggressor terminals send reference signals for the interference measurement to a victim terminal. The network device configures at least one reference signal from the same serving cell, and thus the multiple aggressor terminals may be aggressor terminals from the same serving cell. Of course, in some cases, the multiple reference signals configured by the network device may come from different cells, but the synchronization errors between the different cells and the serving cell which the victim terminal resides in are the same, the cells with the same synchronization error may be considered to be the same serving cell.

For another example, it may be assumed that if only one reference signal is configured, there is no case that the reference signal comes from different serving cells. Of course, in some specific scenarios, if the reference signals configured by the network device are sent to the victim terminal via aggressor terminal(s) in different serving cells, the reference signals from different serving cells may be considered to be different reference signals.

In some embodiments, the time for reference signals sent by different aggressor terminals to arrive at the victim terminal is mainly related to the propagation delays of the reference signals and the inter-cell synchronization error. The aggressor terminals and the victim terminal are often close to each other and the delay may be ignored. The synchronization error between different serving cells may usually reach up to 3 µs. Therefore, the delays of the reference signals sent by different aggressor terminals arriving at the victim terminal are mainly determined by the inter-cell synchronization error. Thus, the network device configures at least one reference signal from the same serving cell to make the inter-cell synchronization error the same. The victim terminal may receive the reference signals sent by the neighboring cells with the same synchronization error almost at the same time. For the victim terminal, at least one reference signal that arrives at the terminal within the first continuous time period may come from the same serving cell.

For example, the network device may configure at least one reference signal from a certain cell, such as a serving cell 5. The victim terminal may receive reference signal(s) that arrives(arrive) at the terminal within the first continuous time period and comes(come) from the serving cell 5. Of course, the network device may configure the reference signal(s) from which serving cell based on actual conditions or based on a predefined method, and the present disclosure does not limit this.

It can be understood that the network device configures the reference signal(s) arriving at the terminal within the first time period to be from the same serving cell, and a subsequent interference measurement is performed based on the reference signal(s). Thus, ISI interference between reference signal(s) arriving at the terminal outside the first continuous time period and reference signal(s) arriving at the terminal within the first continuous time period can be avoided, thereby improving the interference detection accuracy.

In the present disclosure, the network device configures at least one reference signal from the same serving cell, the ISI interference between such reference signal and reference signal(s) arriving at the terminal within the first continuous time period can be avoided, thereby improving interference detection accuracy.

In the interference measurement method provided by an embodiment of the present disclosure, the at least one reference signal configured by the network device comes from serving cell(s) of the same type.

In some embodiments, the at least one reference signal configured by the network device may arrive at the terminal within the first continuous time period, and the at least one reference signal comes from serving cell(s) of the same type.

That is, the network device configures the reference signal(s) arriving at the terminal within the first continuous time period to be reference signal(s) from serving cell(s) of the same type. Alternatively, the network device configures reference signal(s) that arrives(arrive) at the terminal within the first continuous time period and is(are) from serving cells of different types.

For example, the network device determines the first continuous time period, and configures at least one reference signal arriving at the terminal within the first continuous time period. The at least one reference signal is reference signal(s) from the same serving cell.

For example, it is assumed that multiple aggressor terminals send reference signals for the interference measurement to a victim terminal, and the network device configures at least one reference signal from serving cell(s) of the same type, and thus the multiple aggressor terminals may be aggressor terminals from serving cell(s) of the same type.

For another example, it may be assumed that if only one reference signal is configured, there is no case that the reference signal comes from serving cells of different types. Of course, in some specific scenarios, if the reference signals configured by the network device are sent to the victim terminal via aggressor terminal(s) in serving cells of different types, the reference signals from serving cells of different types may be considered as different reference signals.

In some embodiments, the time for reference signals sent by different aggressor terminals to arrive at the victim terminal is mainly related to the propagation delays of the reference signals and the inter-cell synchronization error. The aggressor terminals and the victim terminal are often close to each other and the delay can be ignored. In the scenario of a heterogeneous network, if at least one aggressor terminal comes from serving cell(s) of the same type, the inter-cell synchronization error may also be considered to be the same. Therefore, the network device configures at least one reference signal from the serving cell(s) of the same type to make the inter-cell synchronization error the same. The victim terminal may receive the reference signals sent from neighboring cells with the same synchronization error almost at the same time. For the victim terminal, at least one reference signal that arrives the terminal within the first continuous time period may come from serving cell(s) of the same type.

For example, the network device may configure at least one reference signal from a cell of a certain type, such as a macro cell or a micro cell. The victim terminal may receive reference signal(s) that arrives(arrive) at the terminal within the first continuous time period and comes(come) from the macro cell or the micro cell. Whether the reference signal(s) configured by the network device comes(come) from the macro cell or the micro cell may be set based on actual circumstances or determined based on a predefined method, and the present disclosure does not limit this.

It can be understood that the network device configures the reference signal(s) arriving at the terminal within the first time period to be from serving cell(s) of the same type, and a subsequent interference measurement is performed based on the reference signal(s). This can avoid ISI interference between reference signal(s) arriving at the terminal outside the first continuous time period and reference signal(s) arriving at the terminal within the first continuous time period, thereby improving the interference detection accuracy.

In the present disclosure, the network device configures at least one reference signal from serving cell(s) of the same type, the ISI interference between such reference signal and reference signal(s) arriving at the terminal within the first continuous time period can be avoided, thereby improving interference detection accuracy.

In the interference measurement method provided by an embodiment of the present disclosure, a duration of the first continuous time period is determined by at least one of the following method(s): determining second configuration information, where the second configuration information is used to indicate the duration of the first continuous time period; or determining the duration of the first continuous time period based on a predefined rule.

In some embodiments, the network device determines the second configuration information, where the second configuration information is used to indicate the duration of the first continuous time period, and the network device may send the second configuration information to the terminal.

For example, the second configuration information includes a parameter indicating the duration of the first continuous time period.

In some embodiments, the network device determines the duration of the first continuous time period based on a predefined rule.

For example, the predefined rule predefines the duration of the first continuous time period. The network device may determine the duration of the first continuous time period based on a second predefined rule, so that the network device may subsequently configure at least one reference signal arriving at the terminal within the first continuous time period.

The present disclosure provides multiple methods for determining the first continuous time period, so as to configure at least one reference signal arriving at the terminal within the first continuous time period. This allows the terminal to perform the interference measurement based on the at least one reference signal. The present disclosure can ensure that ISI interference does not exist between multiple reference signals simultaneously received by the terminal, thereby improving interference detection accuracy.

In the interference measurement method provided by an embodiment of the present disclosure, the duration corresponding to the first continuous time period is less than or equal to a duration of a CP corresponding to a downlink time unit.

In some embodiments, the duration of the first continuous time period may be set to be the same as the duration of the CP corresponding to the downlink time unit, so as to ensure that no ISI interference is generated between at least one reference signal received by the terminal within the first continuous time period.

For example, different CP durations may be determined based on differences in parameters such as CP type and subcarrier spacing. CP types may be divided into a normal CP and an extended CP. For example, the normal CP may be used as an example, as shown in Table 1.

It can be seen that for a certain type of CP, different subcarrier spacing has different CP durations, which may be selected based on actual conditions.

In some embodiments, the duration of the first continuous time period may be set to be less than the duration of the CP corresponding to the downlink time unit, so as to ensure that no ISI interference is generated between the at least one reference signal received by the terminal within the first continuous time period. It can be appreciated that, in a case that the duration of the first continuous time period is the same as the duration of the CP corresponding to the downlink time unit, the SI interference between the at least one reference signal received by the terminal within the first continuous time period can be avoided, and thus even if the at least one reference signal is received within a shorter first continuous time period, the ISI interference is not generated.

Of course, the duration of the first continuous time period may also be set to be a suitable value according to the situation, and the present disclosure does not limit it.

It can be understood that the duration of the CP may also be the same as the duration of the time window mentioned above. In the present disclosure, "CP duration" and "the duration of the CP" may be used interchangeably.

In the present disclosure, at least one reference signal arriving at a terminal within a CP duration is determined, and the interference measurement is performed based on the at least one reference signal. The present disclosure can ensure that there is no ISI interference between multiple reference signals simultaneously received by the terminal, and thus improving interference detection accuracy.

In some embodiments, the configuration information, first configuration information, second configuration information, etc. mentioned in the above embodiments of the present disclosure may be Radio Resource Control (RRC) signaling, Medium Access Control Control Element (MAC CE) signaling, Downlink Control Information (DCI) and/or Sidelink Control Information (SCI), etc., and the present disclosure does not limit this.

In some implementations, the network device may determine a time offset and determine a starting position of a time window corresponding to the first continuous time period based on the time offset and a downlink time unit boundary. Based on the starting position of the time window, the network device may determine that the terminal performs the interference measurement at a corresponding time domain position and determine not to schedule the terminal to send or receive data at the corresponding time domain position.

In some embodiments, the network device may configure a time offset for the terminal, so that the terminal determines the starting position of the time window corresponding to the first continuous time period with the time offset as an offset. Taking FIG. 4 as an example, it is assumed that the terminal receives at least one reference signal configured on the second DL symbol. When the terminal starts to receive the reference signal based on the starting position of the time window corresponding to the first continuous time period, the previous DL symbol is occupied. Of course, the duration of the time window corresponding to the first continuous time period may be greater than one OFDM symbol, and thus the starting position of the time window determined by the terminal may be advanced by more symbols. Therefore, the network device may not schedule the terminal to send or receive data on these symbols.

In some embodiments, the above solutions will be described in a more specific implementation in the present disclosure.

At the terminal side:
In some embodiments, the terminal receives multiple CLI RSs based on a configuration and performs corresponding CLI measurements:
Method 1: the terminal side does not expect to receive multiple CLI RSs outside a CP duration.

In some embodiments, the terminal does not expect the time interval for multiple CLI RS resources configured at the same time domain position to arrive at the victim UE to be outside the CP duration.

It can be understood that the same time domain position may represent the same OFDM symbol, slot, frame, subframe, etc. However, the first continuous time period is often shorter than a duration corresponding to the same time domain position. Therefore, even if the at least one reference signal configured by the network device corresponds to the same time domain position, it is still needed to be ensured that the at least one reference signal is received within the first continuous time period to avoid ISI interference.

In some embodiments, the terminal does not expect that multiple CLI RS resources configured at the same time domain position come from different serving cells.

In some embodiments, the terminal does not expect that multiple CLI RS resources configured at the same time domain position come from serving cells of different types.

Method 2: the terminal side determines a time window with a duration of the CP range and receives one or more CLI RSs within the time window. The starting position of the time window is determined based on the following method(s):
In some embodiments, the starting position of the time window is determined based on the time when the first CLI RS is received by the terminal.

In some embodiments, the starting position of the time window is determined based on a reception time of a CLI RS corresponding to the largest RSRP/RSSI among multiple CLI RSs received by the terminal.

In some embodiments, the starting position of the time window is determined based on a reception time of a CLI RS corresponding to the largest/ smallest RS ID among multiple CLI RSs configured for the terminal for the CLI measurement simultaneously.

In some embodiments, the starting position is determined based on a reference CLI RS arrival time, and the reference CLI RS is determined based on a configuration.

In some embodiments, for CLI RS(s) outside the time window, the terminal abandons receiving of the corresponding CLI RS(s).

At the network device side:
In some embodiments, the network device configures multiple CLI RSs and determine that the terminal performs corresponding CLI measurements at the same time:
Method 1: the network device determines that multiple configured CLI RSs are received by the victim UE simultaneously within the CP duration.

In some embodiments, the network device determines that multiple configured CLI RSs corresponding to the same time domain position are simultaneously received by the victim UE within the CP duration.

In some embodiments, the network device determines that the multiple configured CLI RSs corresponding to the same time domain position are from the same serving cell.

In some embodiments, the network device determines that the multiple configured CLI RSs corresponding to the same time domain position are from serving cell(s) of the same type.

Method 2: the network device determines a time window with a duration which is the CP range. The starting position of the time window is determined based on the following method(s):

In some embodiments, the starting position of the time window is determined based on the time when the first CLI RS arrives at the terminal.

In some embodiments, the starting position of the time window is determined based on a reception time of a CLI RS corresponding to the largest/smallest RS ID among multiple configured CLI RSs corresponding to the same time domain position.

In some embodiments, an indication signaling is sent to indicate a CLI RS corresponding to the starting position of the time window.

In some embodiments, the network device determines that for CLI RS(s) outside the time window, the terminal abandons receiving of the corresponding CLI RS(s).

The following describes the specific implementations of the present disclosure from the perspective of the terminal and the network device.

It is assumed that the terminal is a Rel-18 or later version terminal and the terminal supports the DTDD feature. The terminal performs corresponding CLI measurement reporting at a corresponding time-frequency domain location based on a configuration of the network device.

The embodiments of the present disclosure mainly focus on multiple CLI RSs received simultaneously by a victim terminal within the same time domain range. The multiple CLI RSs corresponding to the disclosed solution indicate multiple configured CLI RSs transmitted on the same current OFDM symbol. For example, if CLI RS resource #1, CLI RS resource #2, and CLI RS resource #3 are configured on the same OFDM symbol #3, the multiple configured CLI RSs are the multiple CLI RSs transmitted "simultaneously" corresponding to OFDM symbol #3.

### Implementation 1:

For multiple configured CLI RSs, the terminal does not expect to receive multiple CLI RSs outside the CP duration. Specifically, the terminal does not expect the difference between the reception time of the first CLI RS and the reception time of the last CLI RS to exceed the CP duration. The CP duration is related to the SCS and CP type of the terminal. For details, see Table 1.

The time difference for CLI RSs corresponding to different aggressor UEs to arrive at the victim UE is mainly related to RS propagation delay and inter-cell synchronization error (between the cell which the victim UE resides in and the cells which the aggressor UEs reside in). For mutually interfering aggressor UEs and the victim UE, the corresponding propagation delay may be ignored considering that the distance between the UEs is relatively short. However, the inter-cell synchronization error may be as high as 3µs, and thus the time difference for different CLI RSs to arrive at the victim UE is primarily determined by the synchronization error between network devices. For different aggressor UEs that send corresponding CLS RSs, if the multiple aggressor UEs belong to the same cell, the corresponding synchronization error is the same. Thus, the terminal does not expect multiple CLI RSs to come from different serving cells.

From another perspective, considering a heterogeneous network (HetNet) scenario, if different aggressor UEs reside in cell(s) of the same type, such as a macro cell or a micro cell, their CLI RS propagation delay and/or inter-cell synchronization error are similar. Thus, the terminal does not expect multiple CLI RSs to come from cells of different types.

From the perspective of the network device:
Based on factors such as the CLI RS propagation delay and inter-cell synchronization error (between the cell which the victim UE resides in and the cells which the aggressor UEs reside in), the network device determines multiple CLI RSs configured on the same OFDM symbol for performing CLI measurements, the multiple CLI RSs come from different aggressor UEs, and the multiple CLI RSs arrive at the victim UE within the CP duration. That is, the difference between the reception time of the first CLI RS that arrives at the victim UE and the reception time of the last CLI RS that arrives at the victim UE does not exceed the CP duration.

The time difference for CLI RSs corresponding to different aggressor UEs to arrive at the victim UE is primarily related to RS propagation delay and inter-cell synchronization error (between the cell which the victim UE resides in and the cells which the aggressor UEs reside in). For mutually interfering aggressor UEs and the victim UE, the corresponding propagation delay may be ignored considering that the distance between them is relatively short. However, the synchronization error between different cells may be as high as 3 µs. Therefore, the time difference for different CLI RSs to arrive at the victim UE is mainly determined by the synchronization error between network devices. For different aggressor UEs that send corresponding CLS RSs, if the multiple aggressor UEs belong to the same cell, the corresponding synchronization error is the same, and thus the network device configures multiple CLI RSs from the same serving cell.

From another perspective, considering a HetNet scenario, if different aggressor UEs reside in cell(s) of the same type, such as a macro cell or a micro cell, their CLI RS propagation delay and/or inter-cell synchronization error are similar, and the network device configures multiple CLI RSs from one or more serving cells of the same type.

The present disclosure determines that the victim UE receives the CLI RS(s) within the CP range, thereby effectively reducing the IS1 and improving the CLI measurement accuracy.

### Implementation 2:

Corresponding to the multiple configured CLI RSs, the terminal receives one or more CLI RSs arriving within the CP time window; for CLI RS(s) arriving outside the CP time window, the terminal gives up receiving of the corresponding CLI RS(s).

The duration of the CP time window is equal to the duration of the CP. The CP duration depends on the SCS and CP type of the terminal. Taking the normal CP as an example, the CP time corresponding to different SCS scenarios is shown Table 1.

The starting position of the CP time window is determined based on the following method(s):
Method 1: the starting position of the CP time window is equal to the time when the first CLI RS is received by the terminal.
Method 2: the starting position of the CP time window is equal to the reception time of the CLI RS corresponding to the largest RSRP/RSSI among multiple CLI RSs received by the terminal.
Method 3: the starting position of the CP time window is equal to the reception time of the CLI RS corresponding to the smallest/largest RS ID among the multiple configured CLI RSs.
Method 4: the starting position of the CP time window is equal to the arrival time of a reference CLI RS, and the reference CLI RS is determined based on a network configuration.

The present disclosure defines a CP time window to ensure that the terminal receives the corresponding CLI RS(s) within the CP range, thereby effectively reducing I SI and improving CLI measurement accuracy.

It should be noted that those skilled in the art will appreciate that the various implementations/embodiments involved in the embodiments of the present disclosure can be used in conjunction with the aforementioned embodiments or can be used independently. Whether used independently or in conjunction with the aforementioned embodiments, the implementation principles are similar. In the implementations of the present disclosure, a part of embodiments are described using examples in which the implementations are used together. Of course, those skilled in the art will appreciate that such examples are not limitations on the embodiments of the present disclosure.

Based on the same concept, embodiments of the present disclosure further provide an interference measurement apparatus and device.

It can be understood that in order to realize the above functions, the interference measurement apparatus and device provided by the embodiments of the present disclosure include hardware structure(s) and/or software module(s) corresponding to the execution of each function. In combination with the unit(s) and algorithm step(s) of each example disclosed in the embodiments of the present disclosure, the embodiments of the present disclosure can be implemented in the form of hardware or a combination of hardware and computer software. Whether a function is implemented in the form of hardware or computer software driving hardware depends on a specific application and design constraints of the technical solutions. Those skilled in the art can use different methods to implement the described functions for each specific application, but such implementation should not be considered as beyond the scope of the technical solutions of the embodiments of the present disclosure.

FIG. 9 is a schematic diagram of an interference measurement apparatus according to an example embodiment. Referring to FIG. 9, the apparatus 200 includes: a processing module 201 configured to determine a first continuous time period; a receiving module 202 configured to receive at least one reference signal arriving at a terminal within the first continuous time period; the processing module 201 is further configured to perform an interference measurement based on the received at least one reference signal.

In the present disclosure, the first continuous time period is determined, and at least one reference signal arriving at the terminal within the first continuous time period is received. The interference measurement can be performed based on the at least one reference signal. The present disclosure ensures that ISI interference does not exist between multiple reference signals simultaneously received by the terminal, thereby improving interference detection accuracy.

In some implementations, the terminal does not expect to receive at least one reference signal that arrives at the terminal outside the first continuous time period.

In the present disclosure, the terminal can ignore at least one reference signal arriving at the terminal outside the first continuous time period. Thus, the present disclosure can avoid ISI interference between such reference signal and reference signal arriving at the terminal within the first continuous time period, thereby improving interference detection accuracy.

In some implementations, the terminal does not expect to receive at least one reference signal from different serving cell(s).

In the present disclosure, the terminal ignores at least one reference signal from different serving cell(s) that arrives at the terminal outside the first continuous time period. Thus, the present disclosure can avoiding ISI interference between such reference signal and reference signal(s) arriving at the terminal within the first duration period, thereby improving interference detection accuracy.

In some implementations, the terminal does not expect to receive at least one reference signal from serving cell(s) of different types.

In the present disclosure, the terminal ignores at least one reference signal from serving cell(s) of different types that arrives at the terminal outside the first continuous time period. Thus, the present disclosure can avoid ISI interference between such reference signal and the reference signal(s) arriving at the terminal within the first continuous time period, thereby improving interference detection accuracy.

In some implementations, the processing module 201 is further configured to determine a time window corresponding to the first continuous time period; and the receiving module 202 is further configured to receive at least one reference signal arriving at the terminal within the time window.

In the present disclosure, a time window corresponding to the first continuous time period is determined, and at least one reference signal arriving at the terminal within the time window is received. The interference measurement can be performed based on the at least one reference signal. The present disclosure can ensure that ISI interference does not exist between multiple reference signals simultaneously received by the terminal, thereby improving interference detection accuracy.

In some embodiments, the time window includes a starting position of the time window, and the starting position of the time window is determined based on at least one of the following method(s): determining based on the time when the first reference signal is received; determining based on the reception time of a first designated reference signal, where the first designated reference signal is a reference signal with the largest or smallest reference signal identity; determining based on the reception time of a second designated reference signal, where the second designated reference signal is determined based on configuration information; determining based on the reception time of a third designated reference signal, where the third designated reference signal is a reference signal whose signal quality meets a quality threshold; determining based on a time offset and a downlink time unit boundary.

The present disclosure provides multiple methods for determining the starting position of the time window so as to receive at least one reference signal arriving at the terminal within that time window. The interference measurement can be performed based on the at least one reference signal. The present disclosure can ensure that ISI interference does not exist between multiple reference signals simultaneously received by the terminal, thereby improving interference detection accuracy.

In some implementations, in response to the starting position of the time window being determined based on the time offset and the downlink time unit boundary, the starting position of the time window is a time domain position obtained by advancing the downlink time unit boundary by the time offset.

In the present disclosure, the starting position of the time window is determined by the time offset and the downlink time unit boundary, so as to receive at least one reference signal arriving at the terminal within the time window. The interference measurement can be performed based on the at least one reference signal. The present disclosure can ensure that ISI interference does not exist between multiple reference signals simultaneously received by the terminal, thereby improving interference detection accuracy.

In some implementations, the receiving module 202 is further configured to receive first configuration information; the processing module 201 is further configured to determine a timing advance based on the first configuration information; or the processing module 201 is further configured to determine the timing advance based on a first predefined rule.

The present disclosure provides multiple methods for determining time offset and downlink time unit boundary, so as to determine the time window based on these time offset and downlink time unit boundary. At least one reference signal arriving at the terminal within the time window is received, and the interference measurement is performed based on the at least one reference signal. The present disclosure can ensure that ISI interference does not exist between multiple reference signals simultaneously received by the terminal, thereby improving interference detection accuracy.

In some embodiments, the receiving module 202 is further configured to receive second configuration information; the processing module 201 is further configured to determine a duration of the first continuous time period based on the second configuration information; or, the processing module 201 is further configured to determine the duration of the first continuous time period based on a second predefined rule.

The present disclosure provides multiple methods for determining the first continuous time period so as to receive at least one reference signal arriving at the terminal within the first continuous time period. The interference measurement can be performed based on the at least one reference signal. The present disclosure can ensure that ISI interference does not exist between multiple reference signals simultaneously received by the terminal, thereby improving interference detection accuracy.

In some implementations, the duration corresponding to the first continuous time period is less than or equal to the duration of a CP corresponding to a downlink time unit.

In the present disclosure, at least one reference signal arriving at the terminal within a CP duration is determined, and the interference measurement is performed based on the at least one reference signal. The present disclosure can ensure that there is no ISI interference between multiple reference signals simultaneously received by the terminal, thereby improving interference detection accuracy.

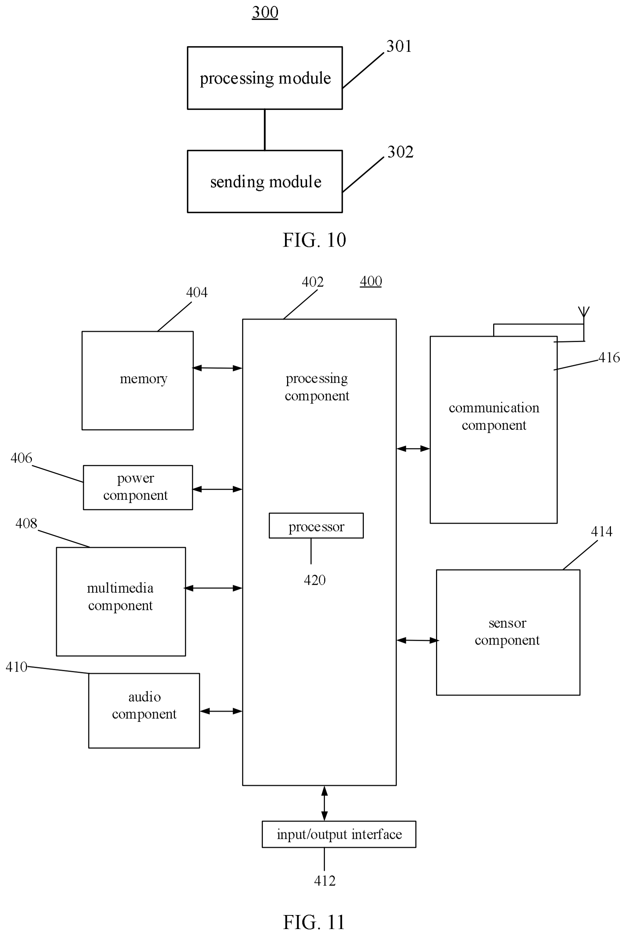

FIG. 10 is a schematic diagram of an interference measurement apparatus according to an exemplary embodiment. Referring to FIG. 10, the apparatus 300 includes: a processing module 301 configured to configure at least one reference signal; and a sending module 302 configured to send configuration information indicating a terminal to receive the at least one reference signal within a first continuous time period and perform an interference measurement.

In the present disclosure, the first continuous time period is determined, and at least one reference signal that arrives at the terminal within the first continuous time period is configured. Thus, the terminal can perform the interference measurement based on the at least one reference signal. The present disclosure ensures that ISI interference does not exist between multiple reference signals simultaneously received by the terminal, thereby improving interference detection accuracy.

In some implementations, the at least one reference signal configured by the responding network device comes from the same serving cell.

In the present disclosure, at least one reference signal from the same serving cell is configured through the network device. The present disclosure can avoid ISI interference between such reference signal and reference signal(s) arriving at the terminal within the first continuous time period, thereby improving interference detection accuracy.

In some implementations, the at least one reference signal configured by the network device comes from serving cell(s) of the same type.

In the present disclosure, at least one reference signal from serving cell(s) of the same type is configured through the network device. The present disclosure can avoid ISI interference between such reference signal and reference signal(s) arriving at the terminal within the first continuous time period, thereby improving interference detection accuracy.

In some implementations, the processing module 301 is further configured to determine a duration of the first continuous time period; and the sending module 302 is further configured to send second configuration information, where the second configuration information is used to indicate the duration of the first duration period.

The present disclosure provides multiple methods for determining the first continuous time period so as to configure at least one reference signal arriving at the terminal within the first continuous time period. Thus, the terminal can perform the interference measurement based on the at least one reference signal. The present disclosure ensures that ISI interference signal interference does not exist between multiple reference signals simultaneously received by the terminal, thereby improving interference detection accuracy.

In some implementations, the duration corresponding to the first continuous time period is less than or equal to the duration of a CP corresponding to a downlink time unit.

In the present disclosure, at least one reference signal arriving at the terminal within a CP duration is determined, and the interference measurement is performed based on the at least one reference signal. Thus, the present disclosure can ensure that there is no ISI interference between multiple reference signals simultaneously received by the terminal, thereby improving interference detection accuracy.

It can be understood that the apparatus 200 may further include a sending module, and the apparatus 300 may further include a receiving module. It should be understood that the apparatus 200 and the apparatus 300 are not limited to the modules shown in the figures, and may further include other corresponding modules according to actual situations, which is not limited in this disclosure.

Regarding the apparatuses in the above embodiments, the specific manner in which each module performs operations has been described in detail in the embodiments of the methods, and will not be elaborated here.

FIG. 11 is a block diagram of an interference measurement device according to an example embodiment. For example, the device 400 may be any terminal such as a mobile phone, a computer, a digital broadcast terminal, a messaging device, a gaming console, a tablet, a medical device, exercise equipment, a personal digital assistant, and the like.

Referring to FIG. 11, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 to execute instructions to perform all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone ("MIC") configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate communication, wired or wirelessly, between the device 400 and other devices. The device 400 can access a wireless network based on a communication standard, such as WiFi, 2G, or 3G, or a combination thereof. In one example embodiment, the communication component 416 receives a broadcast signal or broadcast associated information from an external broadcast management system via a broadcast channel. In one example embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as the memory 404 including instructions executable by the processor 420 in the device 400, for performing the above-described methods. For example, the non-transitory computer-readable storage medium may be a ROM, a Random Access Memory (RAM), a CD-ROM, a magnetic tape, a floppy disc, an optical data storage device, and the like.

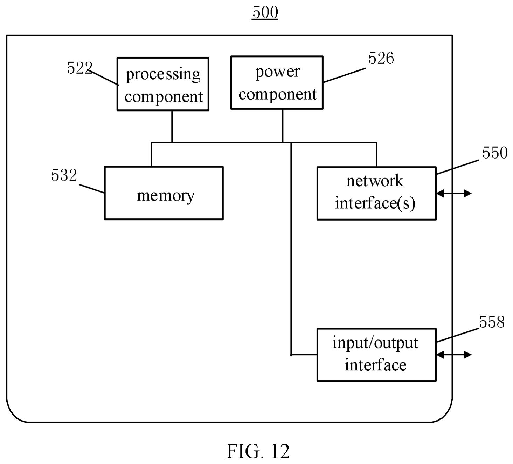

FIG. 12 is a block diagram of another interference measurement device according to an example embodiment. For example, the device 500 may be provided as a base station or a server. Referring to FIG. 12, the device 500 includes a processing component 522 that further includes one or more processors, and memory resources represented by a memory 532 for storing instructions executable by the processing component 522, such as application programs. The application programs stored in the memory 532 may include one or more modules each corresponding to a set of instructions. Further, the processing component 522 is configured to execute the instructions to perform the above methods.

The device 500 may also include a power component 526 configured to perform power management of the device 500, wired or wireless network interface(s) 550 configured to connect the device 500 to a network, and an input/output (I/O) interface 558. The device 500 may operate based on an operating system stored in the memory 532, such as Windows Server^{™}, Mac OS X^{™}, Unix^{™}, Linux^{™}, FreeBSD^{™}, or the like.

The present disclosure proposes a method for determining a unified TCI state for a CSI-RS resource in a case that multiple TRPs are indicated by the unified TCI state. Thus, transmission flexibility of CSI-RS resource based on the unified TCI state can be improved.

For a scenario where a victim UE simultaneously receives multiple CLI RSs to perform CLI measurements, the present disclosure designs a mechanism to ensure that multiple CLI RSs arrive simultaneously within the CP range, thereby reducing IS interference corresponding to the CLI RSs received by the terminal and improving CLI measurement accuracy.

It can be further understood that "multiple" in the present disclosure refers to two or more than two, and other quantifiers are similar. The expression "and/or" describes an association relationship of associated objects, indicating that three relationships may exist. For example, A and/or B may represent: A exists alone, A and B exist at the same time, and B exists alone. The character "/" generally indicates that associated objects before and after the character are in an "or" relationship. The singular forms "a/an", "said" and "the" are also intended to include plural forms, unless the context clearly indicates other meanings.

It can be further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. can be used interchangeably. For example, without departing from the scope of the present disclosure, first information may also be referred to as second information, and similarly, second information may also be referred to as first information.

It can be further understood that the meanings of the words "in response to" and "if" involved in the present disclosure depend on the context and the actual usage scenarios. For example, the word "in response to" used herein may be interpreted as "at the time of..." or "when..." or "if" or "in a case that".

It can be further understood that although operations are described in a specific order in the drawings in the embodiments of the present disclosure, it should not be understood as requiring the operations to be performed in the specific order shown in the drawings or in a serial order, or requiring the execution of all the operations shown in the drawings to obtain a desired result. In certain environments, multitasking and parallel processing may be advantageous.

Other embodiments of the present disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the scope of the appended claims.

## Claims

1. An interference measurement method, performed by a terminal, the method comprising:
determining a first continuous time period;
receiving at least one reference signal arriving at the terminal within the first continuous time period; and
performing an interference measurement based on the received at least one reference signal.

2. The method according to claim 1, wherein the terminal does not expect to receive at least one reference signal that arrives at the terminal outside the first continuous time period.

3. The method according to claim 1 or 2, wherein the terminal does not expect to receive at least one reference signal from different serving cells.

4. The method according to any one of claims 1 to 3, wherein the terminal does not expect to receive at least one reference signal from serving cells of different types.

5. The method according to any one of claims 1 to 4, further comprising:
determining a time window corresponding to the first continuous time period;
wherein receiving the at least one reference signal arriving at the terminal within the first continuous time period comprises:
receiving the at least one reference signal arriving at the terminal within the time window.

6. The method according to claim 5, wherein the time window comprises a time window starting position, and the time window starting position is determined based on at least one of:
determining based on a reception time of the first reference signal;
determining based on a reception time of a first designated reference signal, wherein the first designated reference signal is a reference signal having a largest or smallest reference signal identity;
determining based on a reception time of a second designated reference signal, wherein the second designated reference signal is determined based on configuration information;
determining based on a reception time of a third designated reference signal, wherein the third designated reference signal is a reference signal whose signal quality satisfies a quality threshold; or
determining based on a time offset and a downlink time unit boundary.

7. The method according to claim 6, wherein in response to the time window starting position being determined based on the time offset and the downlink time unit boundary, the time window starting position is a time domain position obtained by advancing the downlink time unit boundary by the time offset.

8. The method according to claim 7, wherein the time offset is determined by at least one of:
receiving first configuration information, and determining a timing advance based on the first configuration information; or
determining the timing advance based a first predefined rule.

9. The method according to any one of claims 1 to 8, wherein a duration of the first continuous time period is determined by at least one of:
receiving second configuration information, and determining the duration of the first continuous time period based on the second configuration information; or
determining the duration of the first continuous time period based on a second predefined rule.

10. The method according to any one of claims 1 to 8, wherein a duration corresponding to the first continuous time period is less than or equal to a duration of a Cyclic Prefix (CP) corresponding to a downlink time unit.

11. An interference measurement method, performed by a network device, the method comprising:
configuring at least one reference signal; and
sending first configuration information, wherein the first configuration information indicates a terminal to receive the at least one reference signal and perform an interference measurement.

12. The method according to claim 11, wherein the at least one reference signal configured by the network device comes from a same serving cell.

13. The method according to any one of claims 11 or 12, wherein the at least one reference signal configured by the network device comes from a serving cell of a same type.

14. The method according to any one of claims 11 to 13, further comprising:
determining a duration of a first continuous time period; and
sending second configuration information, wherein the second configuration information is used to indicate the duration of the first continuous time period.

15. The method according to any one of claim 14, wherein the duration corresponding to the first continuous time period is less than or equal to a duration of a Cyclic Prefix (CP) corresponding to a downlink time unit.

16. An interference measurement apparatus, comprising:
a processing module configured to determine a first continuous time period; and
a receiving module configured to receive at least one reference signal arriving at a terminal within the first continuous time period;
wherein the processing module is further configured to perform an interference measurement based on the received at least one reference signal.

17. An interference measurement apparatus, comprising:
a processing module configured to configure at least one reference signal; and
a sending module configured to send first configuration information, wherein the first configuration information indicates a terminal to receive the at least one reference signal and perform an interference measurement.

18. An interference measurement device, comprising:
a processor; and
a memory configured to store instructions executable by the processor;
wherein the processor is configured to perform the method according to any one of claims 1 to 10.

19. An interference measurement device, comprising:
a processor; and
a memory configured to store instructions executable by the processor;
wherein the processor is configured to perform the method according to any one of claims 11 to 15.

20. A non-transitory computer-readable storage medium, wherein when instructions in the storage medium are executed by a processor of a terminal, the terminal is enabled to perform the method according to any one of claims 1 to 10.

21. A non-transitory computer-readable storage medium, wherein when instructions in the storage medium are executed by a processor of a network device, the network device is enabled to perform the method according to any one of claims 11 to 15.
